# FASCICULE DE BREVET EUROPEEN

(11) **EP 0 402 185 B1**
(45) Date de publication et mention de la délivrance du brevet: **11.08.1993**
(21) Numéro de dépôt: 90401260.6
(22) Date de dépôt: 11.05.1990
(51) Int. Cl.: G01D 5/26, H04B 10/00

(54) **Réseau de capteurs reliés à une centrale distante d'alimentation, de contrôle et de traitement**
Sensornetzwerk, verbunden mit einer entfernten Speisungs-, Überwachungs- und Verarbeitungszentralstelle
Sensor network connected to a remote supplying, monitoring and processing central station

(30) Priorité: 06.06.1989 FR 8907451
(43) Date de publication de la demande: 12.12.1990
(73) Titulaire: THOMSON-CSF, 75008 Paris (FR)
(72) Inventeur: Turpin, Marc, F-92045 Paris la Défense (FR)
(74) Mandataire: Chaverneff, Vladimir

(56) Documents cités:
- EP-A- 0 213 872
- DE-A- 3 419 580
- JOURNAL OF THE INSTITUTION OF ELECTRONIC AND RADIO ENGINEERS. vol. 58, no. 5, juillet 1988, LONDON GB pages S85 - S91; R.C.SPOONCER et al: "Hybrid and resonant sensors and systems with optical fibre links"
- JOURNAL OF THE INSTITUTION OF ELECTRONIC AND RADIO ENGINEERS. vol. 58, no. 5, juillet 1988, LONDON GB pages S99 - S111; A.D.KERSEY et al: "Distributed and multiplexed fibre-optic sensor systems"

## Description

La présente invention a pour objet un réseau de capteurs reliés à une centrale distante d'alimentation, de contrôle et. de traitement.

On connaît des réseaux de capteurs de grandeurs physiques, dont les liaisons sont constituées par des fibres optiques multimodes. Ces réseaux ont par exemple une architecture en étoile, l'exploitation en étant assurée par des techniques de multiplexage temporel ou en longueur d'onde.

Compte tenu de la nature multimode des lignes optiques, ces réseaux ne permettent pas de recevoir des capteurs à fibres optiques de type intrinsèque et/ou à optique intégrée, qui nécessitent des fibres optiques monomodes. De plus, on ne peut pas leur appliquer les concepts associés de multiplexage en cohérence, par exemple dans le cas des capteurs intrinsèques polarimétriques.

On connaît d'après le document Journal of The Institution of Electronic and Radio Engineers; vol. 58, no. 5, juillet/août 1988, London GB, pages S85 - S91 ; R.C. SPONCER et al, : "Hybrid and resonant sensors and systems with optical fibre links", un réseau de capteurs conventionnels pouvant être opto-alimentés, mais le signal de sortie de chaque capteur est converti par une diode électroluminescente, ce qui ne permet pas d'y inclure des capteurs intrinsèques.

La présente invention a pour objet un réseau de capteurs de grandeurs physiques pouvant utiliser des capteurs conventionnels (électro-mécaniques, électriques ou électroniques), et des capteurs intrinsèques à fibres optiques et/ou à optique intégrée, réseau qui soit pratiquement immunisé vis-à-vis des parasites électromagnétiques.

Le réseau conforme à l'invention, comportant des capteurs conventionnels nécessitant une alimentation électrique comprend un premier circuit à fibres optiques d'optoalimentation de capteurs nécessitant une alimentation électrique, un second circuit à fibres optiques d'adressage de capteurs et un troisième circuit à au moins une fibre optique de retour de signal des capteurs auquel sont couplés les différents capteurs, et est caractérisé par le fait que chaque capteur conventionnel est relié à, un élément d'optique intégrée disposé dans le second circuit qui assure le lien entre la sortie électrique du capteur et la partie optique du réseau.

Selon un mode particulier de réalisation de l'invention le réseau comporte en outre des capteurs intrinsèques reliés au second et au troisième circuits.

La présente invention sera mieux comprise à la lecture de la description détaillée d'un mode de réalisation, pris à titre d'exemple non limitatif et illustré par le dessin annexé sur lequel :
- la figure 1 est un schéma de branchement d'un capteur optoalimenté, conformément à l'invention,
- la figure 2 est un schéma de détail d'un coupleur actif optoalimenté conformément à l'invention, et
- la figure 3 est un schéma d'un exemple de réseau de capteurs conforme à l'invention.

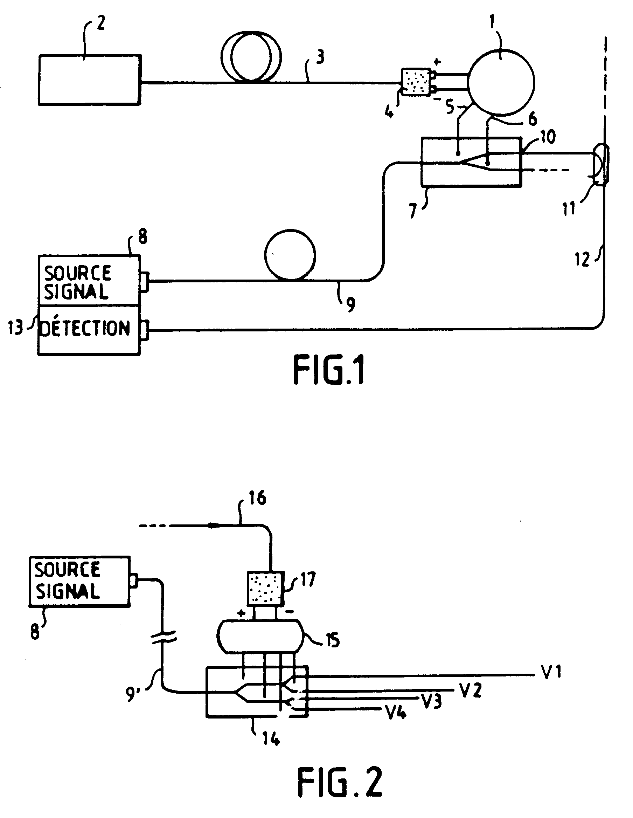

Le capteur 1 représenté en figure 1 est à alimentation électrique et est un capteur de grandeur physique ou d'état quelconque : par exemple capteur de température, de pression, de vitesse, ou détecteur de présence ou d'intrusion, de niveau, de gaz ou de rayonnement... Ce capteur 1 peut fonctionner en tout ou rien, ou tout et peu, ou bien peut fournir différents signaux discrets pour différentes valeurs détectées ou bien fournir des valeurs analogiques. Ce capteur peut être passif (se coutenter de fournir des signaux correspondant aux valeurs détectées ou mesurées) ou actif ou "intelligent", c'est-à-dire comporter des moyens tels qu'un processeur, lui permettant de prendre des initiatives et de dialoguer avec un centre de contrôle. En effet, il est possible de moduler le flux lumineux du circuit d'optoalimentation pour faire parvenir aux capteurs des informations sans affecter le rendement de conversion photoélectrique. Dans la suite de la description, on emploiera simplement le terme de capteur pour désigner l'un quelconque de ces types de capteurs ou de détecteurs

Le capteur 1 reçoit son énergie d'alimentation depuis une source 2 via une liaison optique multimode 3 au bout de laquelle est disposé, le plus près possible du capteur 1, un élément photoélectrique 4. A titre d'exemple, on peut actuellement obtenir avec un élément photoélectrique (à base de Si ou GaAs) une tension de 5 volts et une puissance de quelques mW. Un grand nombre de capteurs connus peuvent être ainsi opto-alimentés. La capteur 1 est du type en "tout ou rien" ou "tout ou peu" et comporte deux sorties 5,6 électriques. La niveau (tension) de sortie est fonction de l'état du capteur : état "tout" (signal actif, alarme, seuil atteint, etc...), état "rien" ou "peu" (pas de signal, seuil non encore atteint, veille, etc...). Ces deux sorties 5,6 sont reliées aux entrées de commande d'un élément 7 en optique intégrée qui est un commutateur ou un modulateur à commande électrique de chemins optiques ou de phases. Dans l'exemple illustré en figure 1, l'élément 7 est du type en "Y", mais il pourrait être de tout autre type, par exemple du type Mach Zehnder, "cobra", etc.

Le circuit actif optique intégrée, assure le codage de l'information électrique en provenance du capteur, en information optique.

Dans le cas où le capteur 1 comporte plus de deux sorties sur lesquelles apparaissent des signaux différents correspondant à des valeurs mesurées différentes (par exemple différents seuils ou différentes températures), l'élément optique 7 doit être du type à plusieurs entrées de commande (voir par exemple l'élément optique intégré de la figure 2), ou bien il faut relier chacune des différentes sorties du capteur 1 à un élément optique intégré correspondant.

L'entrée de l'élément 7 reçoit d'une source 8 un signal lumineux via une fibre optique 9 qui peut être du type monomode spatiale ou monomode à conservation de polarisation.

Une des sorties de l'élément 7, référencée 10, par exemple celle correspondant à l'état "1" du capteur 1, est reliée par un coupleur 11 à une fibre 12 servant de bus collecteur de signaux. La fibre optique 12 peut être soit monomode soit multimode. Suivant le type de fibre, le coupleur 11 est un coupleur passif monomode-monomode ou un coupleur passif monomode-multimode. Cette fibre 12, de type multimode, est reliée à un dispositif de détection 13.

Les sources 2 et 8 et le dispositif de détection 13 peuvent être groupés dans une centrale de contrôle et de traitement éloignée du capteur 1, l'éloignement maximal possible étant fonction des qualités des fibres optiques utilisées, et pouvant atteindre quelques centaines de mètres avec les fibres actuellement connues. Comme expliqué ci-dessous, on peut alimenter et contrôler à partir de ladite centrale, un grand nombre de capteurs en n'utilisant qu'un faible nombre de fibres pour la liaison à grande distance à la centrale éloignée. Bien entendu, d'autres fibres, beaucoup plus courtes, peuvent être utilisées pour les liaisons locales.

On a représenté en figure 2 un répartiteur local de signal lumineux distribuant le signal de la source 8 à quatre éléments tels que l'élément 7 de la figure 1. La source 8 est reliée par une fibre monomode 9′ à un coupleur actif optoalimenté en optique intégrée 14 du type à au moins une entrée et plusieurs sorties, quatre dans le présent exemple, notées V1 à V4. La coupleur 14 comporte quatre entrées de commande, correspondant aux sorties V1 à V4, reliées a un circuit 15 de multiplexage temporel. Le circuit 15 est un circuit électronique classique de multiplexage, réalisé par exemple en technique C-MOS à faible consommation. Ce circuit 15 est optoalimenté, par la source 2 par exemple, via une fibre optique 16 multimode et une cellule photo-électrique 17. Les sorties V1 a V4 du coupleur 14 sont reliées chacune par une fibre optique monomode à un élément tel que l'élément 7 de la figure 1.

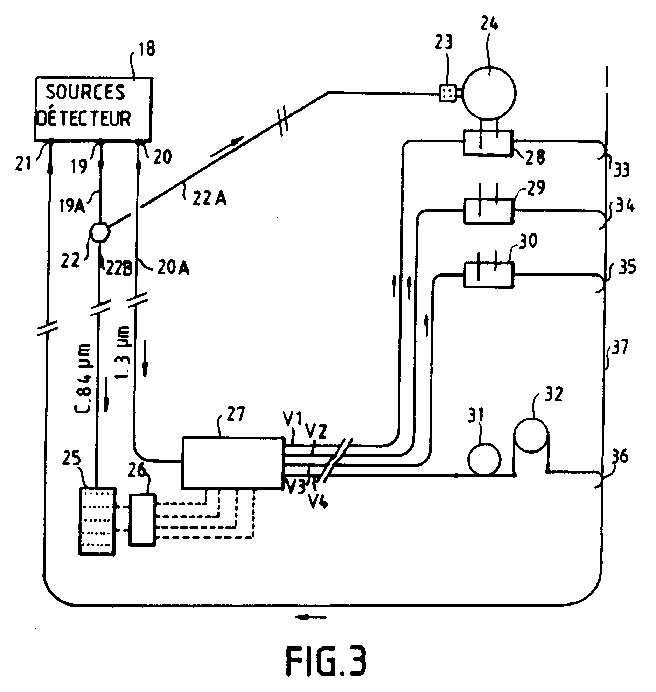

L'exemple de réseau représenté en figure 3 comporte une centrale 18 d'alimentation de contrôle et de traitement comprenant des dispositifs similaires aux dispositifs 2,8 et 13.

La centrale 18 comporte deux sorties principales, référencées 19 et 20 correspondant respectivement à la source d'optoalimentation et à la source de signal lumineux cohérent ou faiblement cohérent et une entrée 21 de circuit de détection et de traitement de signaux de capteurs.

La sortie 19 est reliée par une fibre optique 19A à un coupleur ou répartiteur en étoile 22, qui peut être proche ou déporté de la centrale 18. La coupleur 22 est du type à plusieurs sorties, dont deux seulement ont été représentées. Les sorties du coupleur 22 sont reliées par des fibres optiques à des dispositifs d'optoalimentation photo-électriques individuels comme par exemple la cellule 23 (via la fibre 22A) alimentant un seul capteur (capteur 24) ou collectifs comme par exemple le dispositif photo-électrique 25 (via la fibre 22B) qui sert dans le présent exemple à alimenter non pas des capteurs, mais des circuits de multiplexage tels que le circuit 26. La multiplexeur 26 (similaire au multiplexeur 15 de la figure 2) a ses différentes sorties reliées aux entrées de commande d'un coupleur actif 27 (similaire au coupleur 14 de la figure 2). Les fibres optiques de liaison entre la centrale 18 et les éléments photo-électriques sont des fibres multimodes (fibres 19A,22A,22B).

La sortie 20 de la centrale 18 (sortie de signal lumineux cohérent ou faiblement cohérent) est reliée par une fibre optique monomode 20A a l'entrée de signal du coupleur 27. Dans l'exemple représenté, le coupleur 27 a quatre sorties, mais il est bien entendu qu'il pourrait en avoir davantage, ou qu'on pourrait combiner plusieurs coupleurs pour augmenter le nombre de voies de sortie.

Chacune des voies de sortie V1 à V3 du coupleur 27 est reliée par une fibre optique monomode à un élément commutateur, respectivement référencé 28 à 30. Ces éléments 28 à 30 sont similaires a l'élément 7 de la figure 1. L'élément 28 est commandé par le capteur 24 de la même façon que l'élément 7 est commandé par le capteur 1. Les capteurs commandant les éléments 29 et 30 n'ont pas été représentés. Ces coupleurs sont opto-alimentés de la même façon que le capteur 24 à partir du coupleur 22 ou d'un coupleur similaire relié à la sortie 19.

La voie V4 est reliée à un dispositif capteur intrinsèque à fibres optiques et/ou optique intégrée, de type polarimétrique et/ou interférométrique réparti comportant au moins un capteur polarimétrique ou interférométrique. Dans le présent exemple, il comporte deux tronçons de fibres optiques 31,32. Ceci est possible grâce au fait que les fibres 20A et en particulier celle de la voie V4 ainsi que les fibres 31 et 32 sont monomodes biréfringentes à conservation de polarisation linéaire. On peut ainsi associer au multiplexage temporel utilisé pour adresser les différentes voies de mesure V1 a V4, la technique du multiplexage en cohérence (ou faible cohérence) propre aux capteurs répartis polarimétriques (et/ou interférométriques), utilisant les propriétés spécifiques des fibres optiques à maintien de polarisation.

Les sorties des éléments 28 à 30 et le capteur 31,32 sont reliés par des coupleurs passifs correspondants 33 à 36 à un bus 37 constitué par une fibre optique par exemple de type multimode reliée à l'entrée 21 de la centrale 18. Selon une variante, le bus 37 peut comporter plusieurs fibres monomodes reliées chacune à un ensemble de capteurs. Un ensemble de capteurs peut par exemple comporter des capteurs de même nature ou des capteurs situés dans une même zone géographique.

Ainsi, grâce à l'opto-alimentation des capteurs tels que le capteur 24, on limite fortement, ou même on supprime les liaisons électriques du réseau de capteurs, ce qui lui confère des propriétés d'immunité aux parasites électromagnétiques (il est facile de blinder efficacement la centrale 18, qui peut être en outre disposée en un lieu où les parasites électromagnétiques sont beaucoup plus faibles que dans les lieux où sont implantés les capteurs), et d'isolation galvanique. De la même manière chaque sous-système électrique ou électronique associé aux capteurs peut être blindé localement.

## Revendications

1. Réseau de capteurs reliés à une centrale (18) distante d'alimentation, de contrôle et de traitement, réseau comportant des capteurs conventionnels nécessitant une alimentation électrique (1,24) comportant un premier circuit à fibres optiques d'optoalimentation (3,19,22A) de capteurs nécessitant une alimentation électrique, un second circuit à fibres optiques (9,20A) d'adressage de capteurs, et un troisième circuit à au moins une fibre optique de retour de signal des capteurs (12,37) auquel sont couplés les différents capteurs (1,24), caractérisé par le fait que chaque capteur conventionnel (1,24) est relié à un élément d'optique intégrée (7,28 à 30) disposé dans le second circuit, qui assure le lien entre la sortie électrique d'un capteur et la partie optique du réseau.

2. Réseau selon la revendication 1, caractérisé par le fait qu'il comporte en outre des capteurs intrinsèques (31, 32) reliés au second et au troisième circuits.

3. Réseau selon la revendication 1 ou 2, caractérisé par le fait que le second circuit comprend des fibres optiques monomodes spatiales.

4. Réseau selon la revendication 1, 2 ou 3, caractérisé par le fait que le second circuit comprend des fibres optiques monomodes à conservation de polarisation.

5. Réseau selon l'une des revendications précédentes, caractérisé par le fait que le second circuit comporte au moins un coupleur actif en optique intégrée (14,27) à au moins une entrée et plusieurs sorties (V1 à V4), ce coupleur étant commandé par un dispositif électronique de multiplexage (15,26), les différentes sorties du coupleur constituant chacune une voie d'adressage d'au moins un capteur.

6. Réseau selon la revendication 5, caractérisé par le fait que le dispositif électronique de multiplexage est optoalimenté à partir du premier circuit (25).

7. Réseau selon l'une des revendications 2 à 6, caractérisé par le fait que les capteurs intrinsèques sont des capteurs polarimétriques à fibre optique, compte tenu de la nature monomode du réseau d'adressage.

8. Réseau selon l'une des revendications 2 à 7, caractérisé par le fait que les capteurs intrinsèques sont des capteurs interférométriques à fibre optique.

9. Réseau selon l'une des revendications 2 à 8, caractérisé par le fait que les capteurs intrinsèques sont en optique intégré.

10. Réseau selon l'une des revendications 2 à 9, caractérisé par le fait que les capteurs intrinsèques sont adressés par multiplexage en cohérence.

## Patentansprüche

1. Mit einer entfernten Versorgungs-, Überwachungs- und Verarbeitungszentrale (18) verbundenes Sensornetzwerk, das herkömmliche Sensoren enthält, die eine elektrische Versorgung (1, 24) erfordern, mit einem ersten Lichtleitfaserkreis (3, 19, 22A) zur optischen Versorgung der eine elektrische Versorgung erfordernden Fühler, einem zweiten Lichtleitfaserkreis (9, 20A) zur Adressierung der Fühler und einem dritten, wenigstens eine Lichtleitfaser zur Rückführung des Signals der Fühler enthaltenden Kreis (12, 37), an den die verschiedenen Fühler (1, 24) angekoppelt sind, dadurch gekennzeichnet, daß jeder herkömmliche Fühler (1, 24) mit einem in dem zweiten Kreis angeordneten optischen integrierten Element (7, 28 bis 30) verbunden ist, das die Verbindung zwischen dem elektrischen Ausgang eines Fühlers und dem optischen Teil des Netzwerks gewährleistet.

2. Netzwerk nach Anspruch 1, dadurch gekennzeichnet, daß es außerdem intrinsische Fühler (31, 32) enthält, die an den zweiten und den dritten Kreis angeschlossen sind.

3. Netzwerk nach Anspruch 1 oder 2, dadurch gekennzeichnet, daß der zweite Kreis räumliche Monomoden-Lichtleitfasern enthält.

4. Netzwerk nach Anspruch 1, 2 oder 3, dadurch gekennzeichnet, daß der zweite Kreis Monomoden-Lichtleitfasern mit Polaritätskonservierung enthält.

5. Netzwerk nach einem der vorhergehenden Ansprüche, dadurch gekennzeichnet, daß der zweite Kreis wenigstens einen in integrierter Optik ausgeführten aktiven Koppler (14, 27) mit wenigstens einem Eingang und mehreren Ausgängen (V1 bis V4) enthält, wobei dieser Koppler von einer elektronischen Multiplexieranordnung (15, 26) gesteuert ist und wobei die verschiedenen Ausgänge des Kopplers jeweils einen Adressierungsweg für wenigstens einen Fühler bilden.

6. Netzwerk nach Anspruch 5, dadurch gekennzeichnet, daß die elektronische Multiplexieranordnung mittels des ersten Kreises (25) optisch versorgt wird.

7. Netzwerk nach einem der Ansprüche 2 bis 6, dadurch gekennzeichnet, daß die intrinsischen Fühler in Anbetracht der monomoden Natur des Adressierungsnetzwerks polarimetrische Lichtleitfaser-Fühler sind.

8. Netzwerk nach einem der Ansprüche 2 bis 7, dadurch gekennzeichnet, daß die intrinsischen Fühler interferometrische Lichtleitfaser-Fühler sind.

9. Netzwerk nach einem der Ansprüche 2 bis 8, dadurch gekennzeichnet, daß die intrinsischen Fühler in integrierter Optik ausgeführt sind.

10. Netzwerk nach einem der Ansprüche 2 bis 9, dadurch gekennzeichnet, daß die intrinsischen Fühler durch kohärenzmultiplexierung adressiert werden.

## Claims

1. Network of sensors which are linked to a distant power-supply, monitoring and processing centre (18), a network including conventional sensors requiring an electrical power supply (1, 24) including a first optical fibre circuit for optical power supply (3, 19, 22A) for sensors requiring an electrical power supply, a second optical fibre circuit (19, 20A) for addressing sensors, and a third circuit with at least one optical fibre for signal return from the sensors (12, 37) to which the various sensors (1, 24) are coupled, characterised in that each conventional sensor (1, 24) is linked to an integrated optics element (7, 28 to 30) arranged in the second circuit, which provides the link between the electrical output of a sensor and the optical part of the network.

2. Network according to Claim 1, characterised in that it further includes intrinsic sensors (31, 32) linked to the second and third circuits.

3. Network according to Claim 1 or 2, characterised in that the second circuit comprises spatial monomode optical fibres.

4. Network according to Claim 1, 2 or 3, characterised in that the second circuit comprises polarisation-preserving monomode optical fibres.

5. Network according to one of the preceding claims, characterised in that the second circuit includes at least one active coupler, made as integrated optics (14, 27) to at least one input and several outputs (V1 to V4), this coupler being controlled by an electronic multiplexing device (15, 26), the various outputs of the coupler each constituting one channel for addressing at least one sensor.

6. Network according to Claim 5, characterised in that the electronic multiplexing device is optically powered from the first circuit (25).

7. Network according to one of Claims 2 to 6, characterised in that the intrinsic sensors are optical fibre polarimetric sensors, having regard to the monomode nature of the addressing network.

8. Network according to one of Claims 2 to 7, characterised in that the intrinsic sensors are optical fibre interferometric sensors.

9. Network according to one of Claims 2 to 8, characterised in that the intrinsic sensors are made as integrated optics.

10. Network according to one of Claims 2 to 9, characterised in that the intrinsic sensors are addressed by coherence multiplexing.
